# EUROPEAN PATENT APPLICATION

(11) **EP 1 256 856 A2**
(43) Date of publication of application: **13.11.2002**
(21) Application number: 02253300.4
(22) Date of filing: 10.05.2002
(51) Int. Cl.: G04C 10/00, G04G 1/00

(54) **Composite main plate structure and electronic timepiece using the same**

(30) Priority: 11.05.2001 JP 2001142139
(71) Applicant: Seiko Instruments Inc., Chiba-shi, Chiba (JP)
(72) Inventor: Murai, Yosuke, c/o Seiko Instruments Inc., Chiba-shi, Chiba (JP)
(74) Representative: Sturt, Clifford Mark

(57) **Abstract**

To provide a composite electronic part capable of achieving small-sized formation as a whole by reducing a number of parts, a main plate structure and an electronic timepiece using the same. A composite electric part such as a main plate structure of an electronic timepiece, includes a nonconductive main body portion and at least one conductive portion supported by the nonconductive main body portion, the nonconductive main body portion includes a nonconductive carbon nanotube, the conductive portion includes a conductive carbon nanotube and is molded integrally with the nonconductive main body portion and at least two terminal portions exposed to surfaces of the nonconductive main body portion to give a transfer path of an electric signal between two contact portions of electric parts other than the composite electric part.

## Description

The present invention relates to a composite electric part having a nonconductive main body portion and at least one conductive portion supported by the nonconductive main body portion.

Conventionally, for example, according to an electronic timepiece such as a watch, a battery is contained in a recessed portion formed at an electrically insulating main plate, a metal piece respectively having spring performance is fixedly engaged with the metal plate at a base portion thereof and a terminal piece portion of a front end of the metal piece having the spring performance is elastically pressed to a plus or minus electrode of the battery to thereby output electric energy of the battery. Further, an end portion of the base portion of the respective metal piece on a side opposed to the terminal piece portion, is typically connected electrically to a patterned wiring formed at a circuit board or a wiring board, for example, projected from the main plate and disposed at a vicinity of the main plate by soldering or the like.

However, according to such a composite electronic part, there is needed a mutually connected or bonded region for fixedly engaging a plurality of electric parts (for example, a main plate and a pair of metal pieces) to each other and therefore, the composite electric part is liable to be bulky as a whole. Further, in a typical case of arranging a base portion of a metal piece along a surface of a main plate to facilitate integration, it is necessary to provide an air gap for insulation between the metal piece and contiguous other electric part or the like and therefore, for example, a movement of a watch is liable to be thickened. Further, when a composite electric part is constituted by a plurality of parts, as a mater of course, an increase in a number of pieces of parts is brought about to thereby constitute a cause of increasing fabrication cost or the like.

The invention has been carried out in view of the above-described various points and it is an object thereof to provide a composite electronic part and a main body structure capable of reducing a number of pieces of parts to thereby achieve small-sized formation as a whole and an electronic timepiece using the same.

In order to achieve the above-described object, according to the invention, there is provided a composite electric part having a nonconductive main body portion and at least one conductive portion supported by the nonconductive main body portion wherein the nonconductive main body portion includes a nonconductive carbon nanotube, the conductive portion includes a conductive carbon nanotube and molded integrally with the nonconductive main body portion and at least two terminal portions exposed to a surface of the nonconductive main body portion are provided to give a transfer path of an electric signal between two contact portions of an electric part other than the composite electric part.

According to the composite electric part of the invention, the conductive portion is molded integrally with the nonconductive main body portion and therefore, the number of parts is reduced. Further, according to the composite part of the invention, the conductive portion is molded integrally with the nonconductive main body portion and therefore, the conductive portion is previously integrated with the nonconductive main body portion, in assembling, it is not necessary to integrate the conductive portion to the nonconductive portion and therefore, a reduction in the fabrication cost can be achieved. Further, according to the composite electric part of the invention, the conductive portion is molded integrally with the nonconductive main body portion and therefore, it is not necessary to provide a coupling region for mechanically engaging and fixing the conductive portion and the nonconductive main body portion to each other and therefore, the size of the composite electric part can be minimized. Further, according to the composite electric part of the invention, the conductive main body portion includes the conductive carbon nanotube, the nonconductive main body portion includes the nonconductive carbon nanotube and therefore, with regard to conductivity, the conductive portion and the nonconductive main body portion can be molded by the same material except that kinds of the carbon nanotubes differ from each other with regard to the conductivity and therefore, in integral molding, the conductive portion and the nonconductive main body portion can solidly be coupled and therefore, irrespective of the size and the distributed position of the conductive portion, the conductive portion can be prepared in a mode of an integrally molded product solidly coupled to the nonconductive main body portion.

According to the composite electric part of the invention, although the conductive portion may be formed along the surface of the nonconductive main body portion since the nonconductive main body portion and the conductive portion are formed by integral molding, instead thereof, the conductive portion can be made to path inside of the nonconductive main body portion, in the latter case, it is not necessary to provide extra space or gap for electric insulation from a surrounding electric part or the like when the conductive portion is disposed at the surface of the nonconductive main body portion and therefore, a region occupied by parts including the composite electric part and other electronic part can be minimized.

Further, according to the composite electric part of the invention, the conductive portion is provided with at least the two terminal portions exposed to the surface of the nonconductive main body portion to give the transfer path of the electric signal between the two contact portions of the electric part other than the composite electric part and therefore, by the conductive portion, the electric signal is transmitted between the two contact portions of the other electric part.

In the specification, "electric part" is used in a broad sense including not only a typical electric part such as a battery, an electric wiring, a resistor, a coil or a capacitor but also so-to-speak electronic part such as IC (integrated circuit) or the like except a case self-evident from the context and a case specified particularly limitedly. Further, "transfer path of an electric signal" is used in a broad sense to include both of an electric energy transfer path (power feeding path) and a transfer path of electric information (analog or digital control signal or data) except a case self-evident from the context and a case specified particularly limitedly.

Further, also the composite electric part may be any part so far as the composite electric part includes the nonconductive main body portion and the conductive portion and the nonconductive main body portion comprises, for example, a nonconductive board (main body), a nonconductive block for supporting various terminal pieces, a connector main body or the like. In comparison with the constitution explained in the conventional example, the nonconductive main body portion of the composite electric part comprises, for example, a main plate of a watch, the conductive portion corresponds to the above-described metal piece serving also as the terminal piece portion for a battery and an electric wiring portion for electrically connecting the terminal piece portion to other electric part and the composite electric part constitutes a main plate structure as a whole.

Further, with regard to electric conductivity of the composite electric part, that the main body portion is "nonconductive", signifies that "the conductivity of the main body portion is lower than that of the conductive portion to an identifiable degree". Therefore, although when the conductive portion is provided with a metallic conductivity or a conductive degree, the nonconductive main body portion typically comprises a so-to-speak insulator having high electric insulating performance, depending on cases, the nonconductive main body portion may be provided with a semiconductivity (typically, semiconductive conductive property and conductive degree in a temperature range used). Further, when the nonconductive main body portion comprises a plurality of nonconductive regions separated from each other via conductive portions, all of the nonconductive regions may comprise substantially similar constitutions or a single or a plurality of nonconductive regions may differ from each other. Meanwhile, when the conductive portion is provided with a semiconductivity, the nonconductive main body portion typically comprises an insulator. Further, so far as there is a difference to an identifiable degree with regard to conductivity between the nonconductive main body portion and the conductive portion, depending on cases, both of the nonconductive main body portion and the conductive portion may be provided with a conductivity referred to as metallic normally, the both may be provided with a nonconductivity (insulating performance) referred to as electrically insulating performance normally, or the both may be provided with a semiconductivity normally. Further, when the conductive portion comprises a plurality of conductive regions separated from each other via a nonconductive region constituting a portion of the nonconductive main body portion, all of the conductive regions may comprise a substantially similar constitution or a single or a plurality of conductive regions may differ from each other.

The conductive portion may be distributed in any way in the nonconductive main body portion at a portion thereof other than the terminal portion so far as the conductive portion is provided with the at least two terminal portions exposed to the surface of the nonconductive main body portion to give the transfer path of the electric signal between the two contact portions of the electric part other than the composite electric part, that is, so far as the conductive portion is exposed from the nonconductive main body portion to be able to be electrically connected to the two contact portions of the other electric part at the two terminal portions . In this case, the two contact portions may be two contact portions of a single common electric part other than the composite electric part or may be respective contact portions of two electric parts other than the composite electric part. Further, the contact portion of the electric part may be a limited contact region such as a pad portion of a patterned wiring or may be constituted by a region expanded widely such as a surface electrode portion of a battery. Further, although "terminal portion" of the conductive portion is typically disposed at an end portion of the conductive portion, depending on cases, the "terminal portion" may be a middle portion thereof.

A mode of exposing at the terminal portion may be in the form of a layer along the surface of the nonconductive main body portion or may be a projection from the surface of the nonconductive main body portion. In the latter case, the terminal portion comprises an end portion of the conductive portion and preferably, the exposed end portion is projected from the nonconductive main body portion elastically deformably such that the end portion is pressed to other electric part and electrically connected thereto, in other words, the end portion is brought into electric contact with the contact portion of the electric part.

In this case, a terminal portion comprising a metal piece having spring performance conventionally, can be integrated to the nonconductive main body portion as a portion of the conductive portion and therefore, not only the composite electronic part can be downsized as a whole but also in integrating the composite electric part, handling thereof is extremely facilitated. Further, when the composite electric part is fabricated by two colors or multiple colors injection molding, the carbon nanotube forming the slender terminal portion is aligned more or less along an extended direction of the terminal portion and therefore, bending strength of the terminal portion is also increased.

A number of the conductive portion may be one or one piece or one layer or plural (for example, one pair or two or three or more). In this case, with regard to the conductive portion, the number is referred to as a number of the conductive portions electrically insulated from each other. Therefore, a single one of the conductive portion may be provided with one or a plurality of branches or divided branches.

Meanwhile, although the conductive portion is embedded in the nonconductive main body portion at a region other than a vicinity of the terminal portion electrically connected to the contact of the other electric part such that a space occupied by the composite electric part also in consideration of electric insulation or capacity coupling, can be minimized, depending on cases, a portion thereof other than the terminal portion may be exposed to the surface of the nonconductive main body portion or the conductive portion may be exposed to the surface of the nonconductive main body portion in all the region. In this case, the nonconductive main body portion is typically provided with an attached portion and is attached to other member at the attached portion. Further, although the conductive portion in a state of being embedded in the nonconductive main body portion, is typically provided with substantially constant or similar cross-sectional shape and size irrespective of a portion thereof in the longitudinal direction, the cross-sectional shape or the like may differ according to the portion in the longitudinal direction. For example, when the composite electric part is constituted by a plate shape having a comparatively thin thickness and when the conductive portion is projected at the end portion and is pressed to a contact portion of other electric part to be able to be deformed elastically or displaced elastically in a face substantially in parallel with an expanded main face of the composite electric part, at most portions in the nonconductive main body portion, the conductive portion is constituted by a shape of a strip or a shape of a thin piece (for example, the cross-sectional shape is rectangular shape having a long horizontal length) having a length in a thin thickness direction of the nonconductive portion, that is, small thickness and at the portion of embedding the conductive portion at a vicinity of the projected end portion constituting the terminal portion, the cross-sectional shape is shifted gradually from, for example, a rectangular shape having a long horizontal length to a rectangular shape having a long vertical length to provide a main face different from a main face of the nonconductive main body portion substantially by 90 degrees.

Although most of the carbon nanotube included in the conductive portion typically comprises a conductive carbon nanotube, so far as a conductivity of the conductive portion is sufficiently higher than that of the nonconductive main body portion, a portion or a corresponding portion of the carbon nanotube included in the conductive portion may relatively be nonconductive. Although a rate of the corresponding portion is equal to or smaller than, for example, about 50% typically, depending on cases, the rate may exceed about 50%. Further, a substantially total of the carbon nanotube included in the conductive portion may comprise a conductive carbon nanotube. Further, the conductive portion may simultaneously be blended with or mixed with a component other than the carbon nanotube.

Similarly, although most of the carbon nanotube included in the nonconductive main body portion typically comprises a nonconductive carbon nanotube, so far as a conductivity of the nonconductive main body portion is sufficiently lower than that of the conductive portion, a portion or a corresponding portion of the carbon nanotube included in the nonconductive main body portion may be conductive relatively. Although a rate of the corresponding portion is typically equal to or smaller than about 50%, depending on cases, the rate may exceed 50%. Further, substantially a total of the carbon nanotube included in the nonconductive main body portion may comprise a nonconductive carbon nanotube. Further, the nonconductive main body portion may simultaneously be blended or mixed with a component other than the carbon nanotube.

A conductivity or a nonconductivity with regard to the carbon nanotube, signifies whether the electric conductivity is relatively high or low to an identifiable degree in view of the conductivity similar to the case of the conductivity or the nonconductivity with regard to the (conductive) portion and the main body portion of the composite electric part, typically, the conductive carbon nanotube indicates a carbon nanotube having a metallic conductivity and the nonconductive carbon nanotube indicates a carbon nanotube having comparatively high electrically insulating performance such as a semiconductor having a comparatively large band gap or an insulator.

Further, the fact per se that a carbon nanotube is conductive (metallic conductivity) or nonconductive (conductivity of a semiconductor or an electric insulator) in accordance with a diameter or a chiral angle (spiral degree) thereof, is well known. The conductive carbon nanotube may comprise a component having a constant diameter or chiral angle, or may be mixed with components having different diameters or chiral angles so far as the conductive carbon nanotube is provided with a conductivity sufficiently larger than that of the nonconductive carbon nanotube. Further, the diameter or the like of the respective carbon nanotube per se may not be constant. Similarly, a nonconductive carbon nanotube may comprise a component having a constant diameter or chiral angle or may be mixed with components having different diameters and chiral angles so far as the nonconductive carbon nanotube is provided with a conductivity sufficiently smaller than that of a conductive carbon nanotube. Although it is preferable that a length of the carbon nanotube is sufficiently shorter than the size of the nonconductive main body portion macroscopically to be dispersed uniformly. The length may comparatively be long so far as a resin or the like operated as a base material can disperse the carbon nanotube sufficiently uniformly or equally. Further, in order to make coupling of the carbon nanotubes (including intertwinement) solid, depending on cases, the length may comparatively be long.

Although the carbon nanotube typically comprises so-to-speak single layer nanotube, the carbon nanotube may comprise plural layers (multiple layers) or may be mixed with single layers and plural layers so far as a desired conductive property can be provided. Further, although the carbon nanotube typically comprises only carbon, depending on cases, an atom other than carbon may be interposed at inside or surface of the nanotube or between the tubes.

The nonconductive main body portion and the conductive portion of the composite electric part is typically constituted by dispersing carbon nanotubes having different conductivities at different regions or portions of the same resin. That is, typically, there are separately prepared a nonconductive resin material (when the nonconductive main body portion comprises a plurality of kinds of secondary nonconductive portions, a single kind or plural kinds of nonconductive resin materials in accordance with the kinds) constituted by dispersing a nonconductive carbon nanotube to a resin material by a desired rate at a uniform distribution density, and a conductive resin material (when the conductive portion comprises a plurality of kinds of secondary conductive portions, a single kind or a plural kinds of conductive resin materials in accordance with the kinds) constituted by dispersing a conductive carbon nanotube to a resin material by a desired rate at a uniform distribution density and, for example, by so-to-speak two colors or multiple colors injection molding, the nonconductive main body portion (region) and the conductive portion (region) having a desired pattern are formed and integrally molded. According to the carbon nanotube dispersed in the resin at the uniform distribution density, although a direction or an orientation thereof may be distributed uniformly (isotropically), when there is provided a band-like or a piece-like or a linear shape as a whole, the orientation may be aligned to the longitudinal direction to some degree or substantially completely. Further, two colors or multiple colors injection molding technology per se of resin is well known (for example, refer to "first chapter 1.5.6 two colors (multiple colors) injection molding method" in "injection molding die mold 7" (Japan Institute of Invention & Innovation) in patent map series edited by Japanese Patent Office).

As a resin, for example, polycarbonate resin is used. However, any other resin may be used so far as the resin is a material suitable for forming the composite electric part and a material capable of uniformly or equally dispersing the carbon nanotube.

A rate of carbon nanotube particle or powder dispersed in a resin may arbitrarily be selected in accordance with a property to be provided by the nonconductive main body portion and the conductive portion of the composite electric part so far as the nonconductive main body portion and the conductive portion can be formed into the integral composite electric part. From the view point of conductivity, particularly, at the conductive region (portion) constituted by dispersing the conductive carbon nanotube, it is preferable that the rate of the carbon nanotube is high. Meanwhile, from the view point of mechanical strength, when there is a concern that when the rate of the carbon nanotube is high, integration by the resin as the base material is liable to deteriorate, there is substantially an upper limit in the rate of blending the carbon nanotube in accordance with a kind of a movable member and a kind of the resin or the like. Meanwhile, typically, not only the carbon nanotube is provided with high mechanical strength but also the carbon nanotube per se is provided with elasticity and therefore, by dispersing the carbon nanotube into the resin, the mechanical strength or elasticity can be increased. Therefore, from the viewpoint of the mechanical property, there can be a lower limit in the rate of the carbon nanotube in accordance with a kind of the composite electric part, a kind of the resin or the like. Particularly, when the terminal portion of the conductive portion (typically, terminal portion disposed at the end portion) is projected from the nonconductive main body portion and pressed to a contact portion of other electric part to thereby electrically connect thereto, it is preferable that the conductive portion includes the conductive carbon nanotube at a comparatively high rate at at least the projected region or a vicinity thereof. As described above, the upper limit and the lower limit, that is, the preferable range can be made to differ in accordance with the kind of the composite electric part, the kind of the resin or the like.

Further, instead of achieving integral formation of the nonconductive main body portion and the conductive portion by the resin as the base material, there may be constructed a constitution in which initial molding of the composite electric part is carried out by using an organic material operating as a binder and thereafter, by substantially burning off the binder portion by thermal decomposition, vaporization or the like by heating, the carbon nanotube is substantially burnt solidly to thereby form a molded product of the composite electric part having a high rate or purity of the carbon nanotube. In this case, for example, a residue by burning off is made to mutually couple the carbon nanotubes. However, when the carbon nanotubes can mutually be coupled by a desired strength in accordance with use of the composite electric part, the residue or the like may actually be dispensed with.

When the above-described composite electric part is applied as a main plate structure to a main plate of a watch and a terminal portion for an electrode of a battery, the main plate structure is typically provided with a nonconductive main plate main body portion and a pair of conductive portions for a plus and a minus terminal integrally molded to the nonconductive main plate main body portion, the nonconductive main plate main body portion includes a nonconductive carbon nanotube, each of the pair of conductive portions includes a conductive carbon nanotube, and there are provided at least two terminal portions exposed to a surface of the nonconductive main body portion to give a transfer path of an electric signal between a contact portion of an electric part other than the main plate structure (for example, plus or minus pole of a battery) and a contact portion of still other electric part ( for example, plus or minus of circuit board or electronic part) (including a terminal portion such as a pin). In this case, typically, each of the pair of conductive portions is embedded in the nonconductive main body portion at a region thereof other than the terminal portion. Further, for example, each of the pair of conductive portions comprises a terminal piece portion projected elastically deformably from the nonconductive main body portion at least at one of the terminal portions and capable of being brought into elastic contact with, for example, plus and minus electrodes of a battery.

Embodiments of the present invention will now be described by way of further example only and with reference to the accompanying drawings, in which:-
Fig. 1 is an explanatory plane view showing a related portion of a watch having a main plate with a terminal piece for a battery constituting a composite main plate structure according to a preferable first embodiment of the invention;
Fig. 2 is an explanatory view of a side face for explaining a structure of a plus terminal piece and a wiring portion thereof of the main plate structure in Fig. 1 (recesses and projections on a surface side are shown only in a range necessary for explanation);
Fig. 3 is an explanatory view of a side face for explaining a structure of a minus terminal piece and a wiring portion thereof of the main plate structure in Fig. 1 (recesses and projections on a surface side are shown only in a range necessary for explanation);
Fig. 4 is an explanatory plane view similar to Fig. 1 with regard to a related part of a watch having a main plate with a terminal piece for a battery constituting a composite main plate structure according to a preferable second embodiment of the invention;
Fig. 5 is an explanatory side view similar to Fig. 2 for explaining a structure of a plus terminal piece and a wiring portion thereof of the main plate structure in Fig. 4; and
Fig. 6 is an explanatory side view similar to Fig. 3 for explaining a structure of a minus terminal piece and a wiring portion thereof of the main plate structure in Fig. 4.

An explanation will be given of several preferable modes for carrying out the invention based on several preferable embodiments shown in attached drawings.

### [Embodiments]

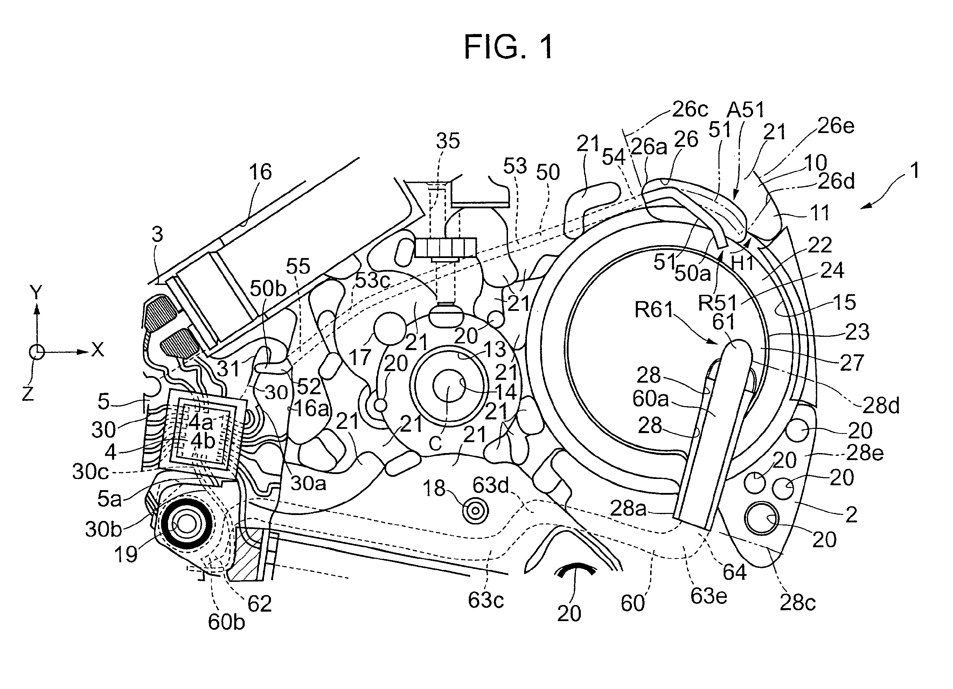

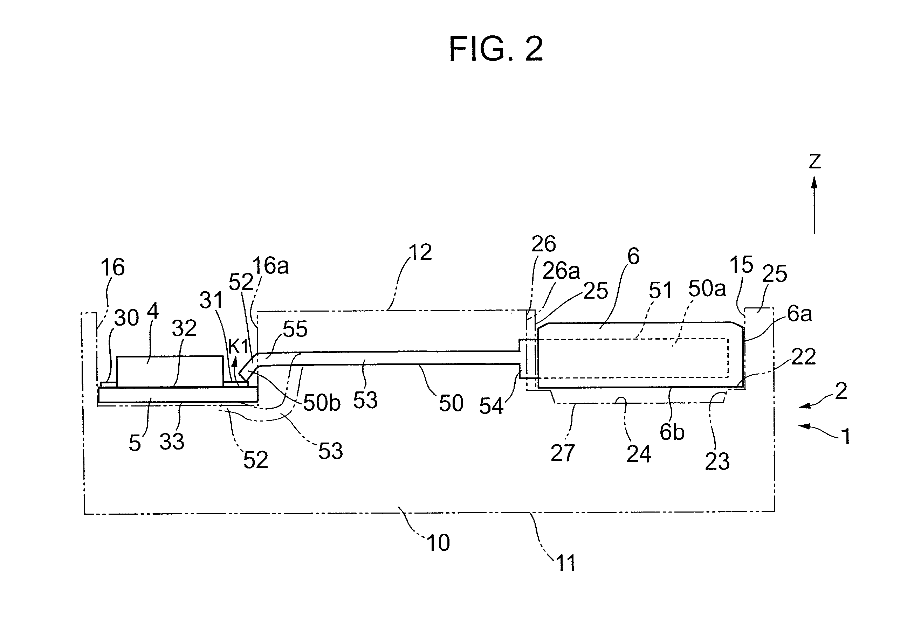

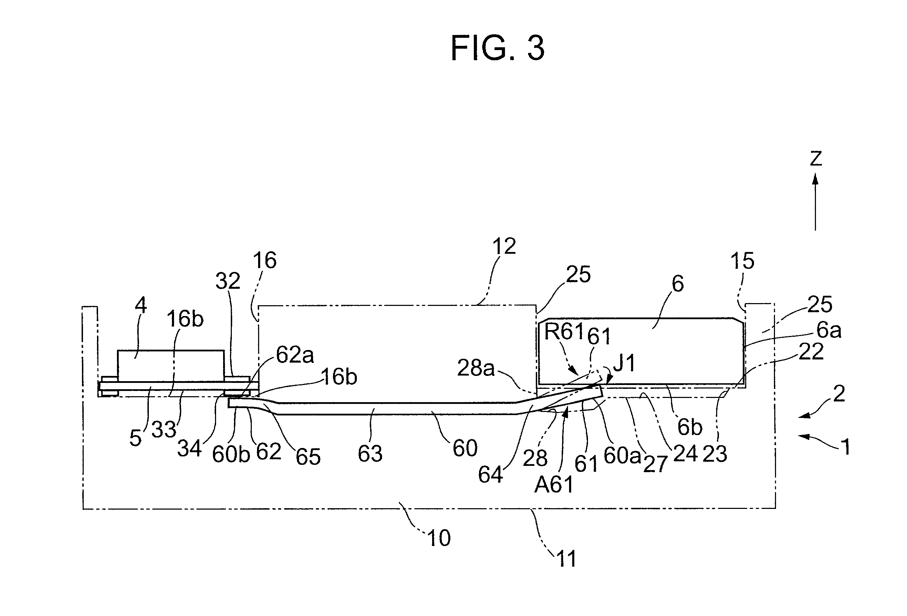

An electronic timepiece 1 of a preferable first embodiment according to the invention, is provided with a main body structure 2 and the main body structure 2 is attached with a circuit board 5 mounted with an oscillator main body 3 including a quartz pipe and an oscillation controlling IC (integrated circuit) 4 for controlling oscillation of the oscillator main body 3 as shown by Fig. 1. Further, it is a main object of Fig. 1 to show that IC 4, a battery, mentioned later, (designated by notation 6 in Fig. 2 and Fig. 3) and the like are electrically connected via the main body structure 2 and therefore, Fig. 1 shows inside of the timepiece 1 in a state of being removed of an exterior part, a hand, a dial and the like thereof and in a state of being removed of a number of mechanical parts of various gears and the like, an electric machine part such as a motor, a circuit block and the like.

The main plate structure 2 is provided with a nonconductive main plate main body portion 10 constituted by uniformly dispersing a nonconductive carbon nanotube in a thermoplastic resin material and a pair of conductive portions 50 and 60 integrally molded with the main plate main body portion 10. In each of the conductive portions 50 and 60, a conductive carbon nanotube is uniformly dispersed in a thermoplastic resin material the same as the thermoplastic resin material of the main plate main body portion 10 and the respective conductive portions 50 and 60 are provided with a conductivity to be operated as power source lines as a whole. Fig. 2 is a schematic side explanatory view viewing the conductive portions 50 from a side along a direction actually orthogonal to a longitudinal direction thereof, Fig. 3 is a schematic side explanatory view viewing the conductive portion 60 from a side along a direction actually orthogonal to a longitudinal direction thereof and in Fig. 2 and Fig. 3, the nonconductive main plate main body portion 10 are shown by imaginary lines. Further, Fig. 2 and Fig. 3 are the schematic side explanatory views and views viewing along an extended direction of X-Y plane of Fig. 1 with a main object of displaying a typical relationship among illustrated elements and are not views viewing strictly along one direction. Further, in Fig. 2 and Fig. 3, in order to be able to clearly show a relative arrangement of the respective conductive portions 50 and 60 and the nonconductive main plate main body portion 10 as well as a relative arrangement of electric parts of IC 4 and the battery 6 of the circuit board 5, the conductive portions 50 and 60 and the nonconductive main plate main body portion 10, structures which are not directly related to these points, are simplified or omitted.

As is schematically shown by, for example, Fig. 2 and Fig. 3, the nonconductive main body portion 10 of the main plate structure 2 is provided with a back face 11 (which is typically provided with a number of recesses and projections although illustrated in Fig. 2 and Fig. 3 as if the back face 11 were a plane for simplification) and a surface 12 having a number of recesses and projections. As shown by, for example, Fig. 1, the recesses and projections of the surface 12 include center recessed portions 13 and 14 arranged with a core portion (rotating shaft) of a fourth pinion of a second hand rotatably around an axis line of C, a battery containing recessed portion 15 for containing the battery 6, a recessed portion 16 for containing the oscillator main body 3, the circuit board 5 for supporting the main body 3 and the like, a hole 17 insertedly fitted with a shaft of a gear constituting a train wheel, a hole 18 insertedly fitted with a shaft of a rotor magnet of a motor, a screw hole 19 for attaching the board 5 and other various holes 20, and include various projected portions or projections 21 having different heights in Z direction such that various parts are mounted at heights in Z direction. Naturally, the back face 11 may also be provided with recesses and projections for enabling to contain or fix various function parts and the like. Further, in the side explanatory views of Fig. 2 and Fig. 3, for simplicity, as described above, the recessed portions other than the recessed portion 15 for containing the battery 6 and the recessed portion 16 for containing the circuit board 5 and the like are not shown. Numeral 35 designates a hole extended substantially in parallel with X-Y plane to insert a winding stem. The hole may be a groove of the surface 12 or the back face 11 of the main plate main body portion 10 depending on cases.

As is known from, for example, Fig. 1 and Fig. 2, the battery containing recessed portion 15 is provided with a shallow center recessed portion 24 at center of a ring-like bottom wall portion 22 via a stepped difference portion 23 and the button type battery 6 is exactly fitted to the recessed portion 15 and a bottom face portion 6a thereof constituting a minus electrode N is supported by the ring-like bottom wall portion 22 of the recessed portion 15 at a ring-like peripheral edge portion thereof. The center recessed portion 24 may be dispensed with so far as a minus terminal piece portion 61 can function as described later.

A peripheral wall portion 25 of the battery containing recessed portion 15 is formed with a plus terminal piece containing recessed portion 26 and a plus terminal piece portion 51 is movable between a reference portion or a return position R51 shown by bold lines in Fig. 1 and an operating position or a contact position A51 shown by imaginary lines at inside of the recessed portion 26. Further, a minus terminal piece containing recessed portion 28 is formed at the peripheral wall portion 25, the stepped difference portion 23 and a bottom wall portion 27 of the center recessed portion 24 and the minus terminal piece portion 61 is movable between a reference position or a return position R61 shown by bold lines in Fig. 1 and shown by imaginary lines in Fig. 3 and an operating position or a contact position A (position substantially escaping into the recessed portion 28) 61 shown by bold lines in Fig. 3.

As shown by Fig. 1, the first conductive portion 50 dispersed with the conductive carbon nanotube in the resin at a uniform distribution density, is provided with the above-described plus terminal piece portion 51 at one end 50a thereof and a power feed terminal piece portion 52 pressed to a conductive pad portion 31 constituting a contact portion of a wiring pattern 30 of the circuit board 5 communicating with a pin 4a of IC4 via a surface side wiring pattern 30a at other end 50b thereof and is provided with a wiring portion or a lead wire portion 53 between the plus terminal piece portion 51 and the power feed terminal piece portion 52.

As shown by broken lines in Fig. 1 and shown by bold lines in Fig. 2, the wiring portion 53 is extended at inside of the nonconductive main plate main body portion 10, that is, at a region between the surface 12 and the back face 11 over its entire length from a side face portion or a side wall portion 26a of the recessed portion 26 of the nonconductive main plate main body portion 10 to a side face portion or a side wall portion 16a of the recessed portion 16 and is brought into a state as if the wiring portion 53 were embedded in the nonconductive main plate main body portion 10. Further, although in this case, portions exposed from the nonconductive main plate main body portion 10 are referred to as the terminal piece portions 51 and 52 and a portion therebetween is referred to as the wiring portion 53, since boundaries between the wiring portion 53 and the respective terminal piece portions 51 and 52 are not strictly defined, portions of the terminal piece portions 51 and 52 at vicinities of the wiring portion 53 may be regarded to include in the wiring portion 53, conversely, portions of the wiring portion 53 at vicinities of the terminal pieces portions 51 and 52 may be regarded to include in the terminal piece portions 51 and 52.

The wiring portion 53 exemplified here is extended linearly in side view as in Fig. 2 and is bent convexly in the upward direction in Fig. 1 at a portion 53c thereof at a vicinity of the terminal piece portion 52 to evade the hole 17 in plane view as in Fig. 1. In the case of adopting such a comparatively simple shape, two colors through multiple colors injection molding of the resin with the carbon nanotube is facilitated. However, the wiring portion 53 may be constituted by any shape so far as the wiring portion 53 can provide a conductive path of a desired electric property between the terminal piece portion 51 and the terminal piece portion 52. That is, for example, the wiring portion 53 may be bent complicatedly as in meandering or may be branched. When there is a concern that when the wiring portion 53 is extended linearly, the wiring portion 53 is intersected with, for example, the hole 35, the wiring portion 53 may be bent, in side view as in Fig. 2, to pass a location shifted in +Z direction or -Z direction at a vicinity of a region at which the wiring portion 53 may be intersected therewith.

As is known from Fig. 2, the wiring portion 53 is prolonged in a thickness direction Z of the main plate structure 2 (that is, a width thereof is widened) at an end portion 54 connected to the terminal piece portion 51 exposed at the side face 26a of the recessed portion 26 (typically, for example, by about 0.5mm through about 1mm, however, may be longer or shorter). A length in Z direction (width) of the end portion 54 of the wiring portion 53 is substantially the same as a length in Z direction (width) of the terminal piece portion 51. Meanwhile, as is known from Fig. 1, a thickness of an end portion 54 of the wiring portion 53 in view of X-Y plane (typically, for example, about 0.1mm through about 0.3mm, however, may be longer or shorter) is substantially the same as thicknesses of a portion of the wiring portion 53 on an inner side of the end portion 54 and the terminal piece portion 51. Therefore, the terminal piece portion 51 is elastically deformable without being twisted between the position R51 and the position A51 of Fig. 1 in a state of being supported by the integrally molded nonconductive main plate main body portion 10 at the end portion 54 of the wiring portion 53 or the like. Further, although the end portion 54 having the wide width may be dispensed with since the conductive wiring portion 53 and the nonconductive main plate main body portion 10 are integrally formed with resin portions constituting base materials, when owing to a difference in a distribution of orientation of the carbon nanotube between a region of dispersed with the conductive carbon nanotube to thereby form the conductive wiring portion 53 and a region dispersed with the nonconductive carbon nanotube to thereby form the nonconductive main plate main body portion 10, a difference in a mechanical property between the two regions is difficult to disregard and there is a limit in integral performance of the two regions, the end portion 54 having the wide width may preferably be provided to avoid the peripheral face 26a of the recessed portion at which stress is liable to concentrate in bending the terminal piece portion 51, from coinciding with a boundary between the terminal piece portion 51 having the wide width and the slender wiring portion 53.

Although according to the example, a cross-sectional shape of the conductive wiring portion 53 stays to be substantially constant except the end portion 54, depending on cases, the cross-sectional shape may differ in accordance with a portion of the conductive wiring portion 53 in the longitudinal direction. For example, at an end portion 55 of the wiring portion 53 connected to the terminal piece portion 52 projected into the recessed portion at the side face 16a of the recessed portion 16 and elastically pressed to the connection pad portion 31 of the wiring pattern 30 at a surface 32 of the circuit board 5, in view of X-Y plane of Fig. 1, a length in Y direction, that is, a width thereof may be widened. Further, when the wiring portion 53 needs to be provided with large current capacity without increasing a thickness (length in Z direction) of the main plate structure 2, for example, a width thereof in view from a plane in parallel with X-Y plane may be enlarged.

Similarly, as is mostly known from Fig. 3, the second conductive portion 60 dispersed with the conductive carbon nanotube in the resin, is provided with the above-described minus terminal piece portion 61 at one end 60a thereof and a power feed terminal piece portion 62 in contact with a conductive pad portion 34 constituting a contact portion formed at a back face 33 of the wiring pattern 30 of the circuit board 5 at other end 60b thereof and is provided with a wiring portion or a lead wire portion 63 integrally connecting the two terminal piece portions 61 and 62 between the minus terminal piece portion 61 and the power feed terminal piece portion 62. Further, according to the example, as shown by Fig. 1, the conductive pad portion 34 is electrically connected to a pin 4b of IC via a patterned wiring portion 30b on a side of the back face 33 of the board connected to the pad portion 34, a through hole 5a of the board 5 connected to the wiring portion 30b and a wiring pattern 30c on a side of the surface 31 of the board connected to the through hole 5a.

As shown by broken lines in Fig. 1 and as shown by bold lines in Fig. 3 , the wiring portion 63 is extended inside of the nonconductive main plate main body portion 10, that is, in a region between the surface 12 and the back face 11 over an entire length thereof from a side face portion or a side wall portion 28a of the recessed portion or the groove portion 28 of the nonconductive main plate main body portion 10 to a bottom face 16b of the recessed portion 16 and the wiring portion 63 is brought into a state in which the wiring portion 63 were embedded in the nonconductive main plate main body portion 10. Further, also in this case, although portions exposed from the nonconductive main plate main body portion 10 are referred to as the terminal piece portions 61 and 62 and a portion therebetween is referred to as the wiring portion 63, boundaries between the wiring portion 63 and the respective terminal piece portions 61 and 62 are not strictly defined and therefore, portions of the terminal piece portions 61 and 62 at vicinities of the wiring portion 63 may be regarded to include in the wiring portion 63, conversely portions of the wiring portion 63 at vicinities of the terminal piece portions 61 and 62 may be regarded to include in the terminal piece portions 61 and 62.

As shown by Fig. 3, in a side view thereof, the wiring portion 63 exemplified here, is extended linearly except an end portion 64 at a vicinity of the terminal piece portion 61 and an end portion 65 at a vicinity of the terminal piece portion 62 and is meandered and bent at portions 63c, 63d and 63e to avoid the holes 18 and 20 or the like in plane view as in Fig. 1 and along the groove 28 at a vicinity of the end portion 64. In the case of adopting such a comparatively simple shape, two colors through multiple colors injection molding of the resin with the carbon nanotube is facilitated. However, also the wiring portion 63 may be constituted by any shape so far as the wiring portion 63 can provide a conductive path of a desired electric property between the terminal piece portion 61 and the terminal piece portion 62. That is, for example, the wiring portion 63 may be bent or meandered further complicatedly or may be branched.

As is known from Fig. 1, at the end portion 64 connected to the terminal piece portion 61 and exposed at the side face 28a of the recessed portion or the groove 28, the wiring portion 63 is widened in its width in a direction of expanding main faces 11 and 12 of the main plate structure 2 (X-Y face) (typically, for example, about 0.5mm through about 1mm, however, may be longer or may be shorter). The width of the end portion 64 of the wiring portion 63 is substantially the same as the width of the terminal piece portion 61 and smaller than the width of the groove 28. Meanwhile, as is known from Fig. 2, a thickness of the end portion 64 of the wiring portion 63 in side view (typically, for example, about 0.1mm through about 0.3mm, however, may be longer or may be shorter), is substantially the same as thicknesses of a portion of the wiring portion 63 on an inner side of the end portion 63a and the terminal piece portion 61. Therefore, the terminal piece portion 61 is elastically deformable without being twisted between the position R61 and the position A61 in a state of being supported by the integrally molded nonconductive main plate main body portion 10 at the end portion 64 of the wiring portion 63.

Although according to the example, a cross-sectional shape of the conductive wiring portion 63 stays to be substantially constant except the end portion 64, depending on cases, the cross-sectional shape may differ in accordance with the portion in the longitudinal direction. Further, the conductive wiring portion 63 may be constituted by a cross-sectional shape similar to that of the conductive path 53 so far as the conductive wiring portion 63 constitutes a conductive path of direct current.

As shown by, for example, Fig. 3, the terminal piece portion 62 is integrally molded such that a surface 62a thereof is substantially flush with the bottom face 16b of the recessed portion 16 or slightly projected from the bottom face 16b and is brought into cross contact with the wiring connecting portion or the conductive pad portion 33 of the wiring pattern 30. Further, as is known from Fig. 1, the terminal piece portion 62 is bent in the wide width plane to evade the attaching hole 19.

The main plate structure 2 integrally provided with the above-described slender first and second conductive portions 50 and 60 with regard to the nonconductive main body portion 10 and the base material, is fabricated by, for example, a two colors or multiple colors difference injection molding method. In this case, as an injection molding die, with the illustrated arrangement of the main plate structure 2 as a reference, typically, for example, there is used a constitution in which an upper die thereof is opened and closed in Z direction and the upper die is provided with a plurality of upper die portions in shapes in accordance with a plurality of stages of the two colors or multiple colors difference injection molding around a rotational axis line in parallel with Z axis in a face in parallel with X-Y plane and revolved around the rotational axis line. However, for example, as in the terminal piece portions 51, 52 and 61, in reference to Fig. 1, in order to form gaps or spaces between the terminal piece portions 51, 52 and 61 and the nonconductive main body portion 10 on back sides thereof, there is used an auxiliary die portion such as a core capable of being put in and out in directions intersecting with Z direction. Substantially the same goes with the horizontal hole 35. Further, when the core is used, typically, a region 26e, 28e or the like interposed by imaginary lines 26c and 26d or imaginary lines 28c and 28d of Fig. 1, is subjected to injection molding at a later step and is integrated to a remaining portion such that the core is permitted to put in and out. Further, instead of forming the region 26e, 28e or the like at later step, there may be constructed a constitution in which the auxiliary die portion or the core is axially supported by an upper die main body portion and pivoted or axially moved around a pivoting shaft or an axially supporting shaft when the auxiliary die portion or the core is drawn.

According to the main plate structure 2 constituted as described above, the nonconductive main plate main body portion 10 is integrally formed with the plus terminal piece portion 51 for the battery 6 and the plus terminal piece portion or the power feed terminal portion 52 for the circuit board 5 along with the plus potential feeding wiring 53 therebetween as the integral slender conductive portion 50 as well as the minus terminal piece portion 61 for the battery 6 and the minus terminal piece portion or the power feed terminal portion 62 for the circuit board 5 along with the minus potential feeding wiring portion 63 as the integral slender conductive portion 60 and therefore, in comparison with a case in which the respectives are formed separately by a metal material or an electrically insulating material, not only mutual engagement and fixing is dispensed with but also structural portions related to mutual engagement and fixing are saved and therefore, the size of the main plate structure 2 can be reduced. Further, since thewiring portions 53 and 63 pass inside of the conductive main plate main body portion 10, with regard to the main plate structure 2 and Z direction, gaps between the main plate structure 2 and other members contiguous thereto on upper and lower sides can be minimized. Particularly, with regard to a thickness direction inherently having a small size, the advantage of reduction in the size is enormous. Further, according to the main plate structure 2, the single composite main plate structure 2 is integrated with all of the conventional main plate, the plus terminal piece for the battery 6, the plus terminal piece for the circuit board 5 and the plus potential feeding wiring therebetween, and the minus terminal piece for the battery 6, the minus terminal piece for the circuit board 5 and the minus potential feeding wiring therebetween and therefore, a reduction in the fabrication cost can be achieved in accordance with a reduction in assembling steps in accordance with a reduction in a number of parts in assembling a timepiece.

Further, according to the watch 1 provided with the main plate structure 2 constituted as described above, in assembling, when the circuit board 5 mounted with IC 4 and the like is mounted to a predetermined position at inside of the recessed portion 16, the board 5 is inserted between the plus terminal piece portion 52 and the bottom portion 16b of the recessed portion 16 such that the conductive pad portion 33 at a back face thereof is mounted above the minus terminal piece portion 62 disposed along the bottom face 16b of the recessed portion 16 and the conductive pad portion 31 disposed on a surface side thereof is brought into close contact with the plus terminal piece portion 52. When the board 5 is inserted, the plus terminal piece portion 52 comprising the resin dispersed with the conductive carbon nanotube at a uniform distribution density, is elastically deformed in a direction designated by notation K1 in Fig. 2 and an end portion thereof is pressed to the conductive pad portion 31 to thereby ensure electric connection.

Further, although according to the example, an explanation has been given of an example of electrically connecting the terminal piece portion 52 to the surface side pad portions 31 on the surface side of the board 5, in order to facilitate to arrange the board 5, as shown by imaginary lines 52 and 53 in Fig. 2, there may be constructed a constitution in which the wiring portion 52 and the terminal piece portion 53 are extended at inside of the main plate main body portion 10 and the terminal piece portion 52 is also electrically connected to a predetermined back face side pad portion on the back face side of the board 5. Also in this case, electric connection with the terminal piece portions 52, 62 or the like is ensured by strongly fixing the board 5 to the main plate structure 2 by fastening screws to a single or a plurality of the attaching holes 19. Meanwhile, contrary thereto, the terminal piece portion 62 may also be connected electrically to a predetermined surface side pad portion on the surface side of the board 5 similar to the terminal piece portion 52.

Further, in delivering the watch 1 or in interchanging the battery, when the battery 6 is mounted to the battery containing recessed portion 15, the spring-like plus and minus terminal piece portions 51 and 61 returned to the return positions R51 and R61, are respectively pressed in H1 and J1 directions by the peripheral face portion 6a and the bottom face portion 6b as the contact portions constituting the plus pole and the minus pole of the battery 6 and pressed to the plus and the minus poles 6a and 6b at the positions A51 and A61.

According to the watch 1, the plus and the minus terminal piece portions 51 and 61 comprise the resin dispersed with the conductive carbon nanotube and reinforced by the nanotube and therefore, in a state of having sufficient mechanical strength and elasticity, the plus and the minus terminal piece portions 51 and 61 are brought into press contact with the plus and the minus pole faces 6a and 6b of the battery 6 to thereby ensure electric connection between the plus and the minus terminal piece portions 51 and 61 and the pole faces 6a and 6b. Further, for example, when the carbon nanotube is oriented to some degree along the longitudinal directions of the terminal pieces 51 and 61, the mechanical strength and the elasticity can be increased. Such an orientation performance can be produced when the fluid nanotube dispersed resin injected into the die is made to flow along a slender gap for forming the slender conductive portion in injection molding, by orienting the nanotube along the flow direction. Further, the terminal pieces 51 and 61 are integrally molded with the nonconductive main plate main body portion 10 and integrally formed with the end portions 54 and 64 of the wiring portions 53 and 63 integrally embedded in the main body portion 10 and therefore, the terminal piece portions 51 and 61 can solidly be supported by the main plate main body portion 10 and therefore, there is rarely a concern that the terminal piece portions 51 and 61 become unstable by using the terminal piece portions 51 and 61. Further, in view of composition, the nonconductive main plate main body portion 10 and the conductive portions 50 and 60 are provided with substantially the same composition, the resin constituting the base material can be formed by a common or same material and therefore, the above-described integral performance can be promoted. Therefore, strength of mutual connection and fixing of the main body portion and the conductive portions 50 and 60 can be made far larger than that in the case of embedding a metal piece in the resin. Further, the same is applicable to electric connection between the terminal piece portion 52 and the conductive pad portion 31 on the opposed side and fixing the terminal piece portion 52. The carbon nanotube is completed as a cylindrical graphite-like structure and therefore, even when the nanotube is exposed to the surface, the nanotube is inherently defectless and comparatively stable and therefore, friction between the terminal piece portions 52 and 62 and respective portions of the board 5 is liable to be comparatively small.

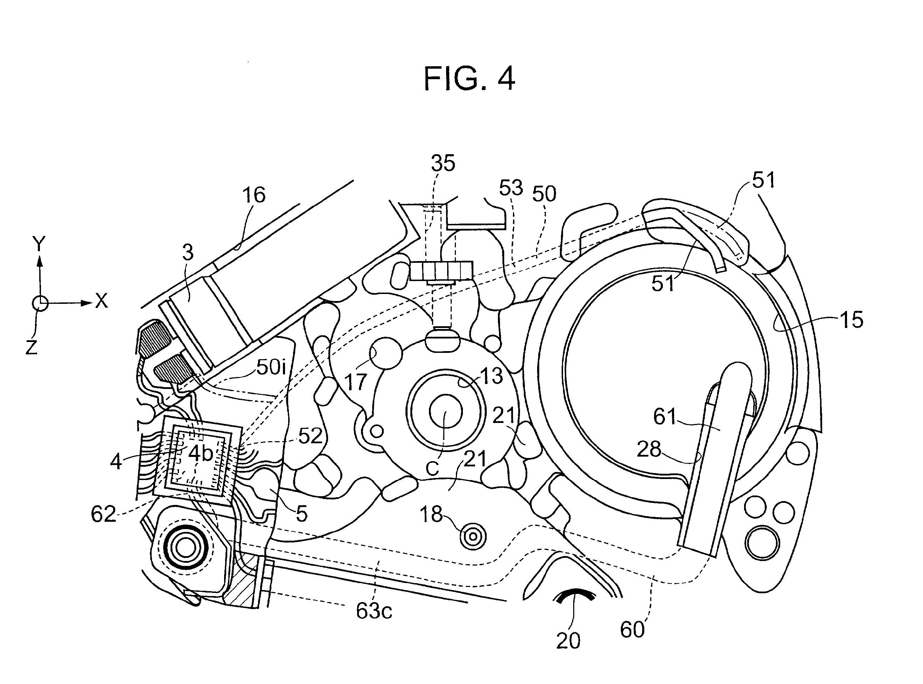

The terminal piece portions 52 and 62 of the conductive portions 50 and 60 may directly be connected to circuit parts such as IC 4 as shown by Fig. 4 through Fig. 6, for example, as a second embodiment instead of being connected to circuit parts such as the oscillator 3 and IC 4 via the patterned wiring 30 as shown by Fig. 1 through Fig. 3.

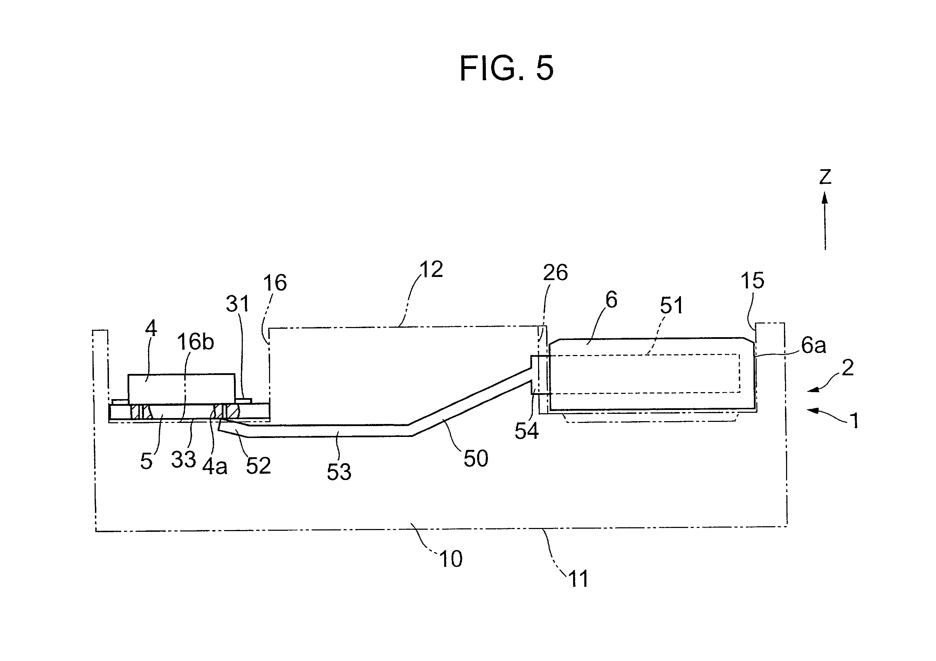

According to the example, as is mostly understood from Fig. 5 schematically showing a side face similar to that of Fig. 2, a pin 4a of IC 4 substantially penetrates the board 5 and is slightly projected from the back face 33 of the board 5 and the plus terminal piece 52 of the slender conductive portion 50 is exposed from the bottom face 16b of the recessed portion 16 and is brought into contact with a front end of the pin 4a on the side of the back face 33 of the board 5 mounted with IC 4 mounted to the recessed portion 16.

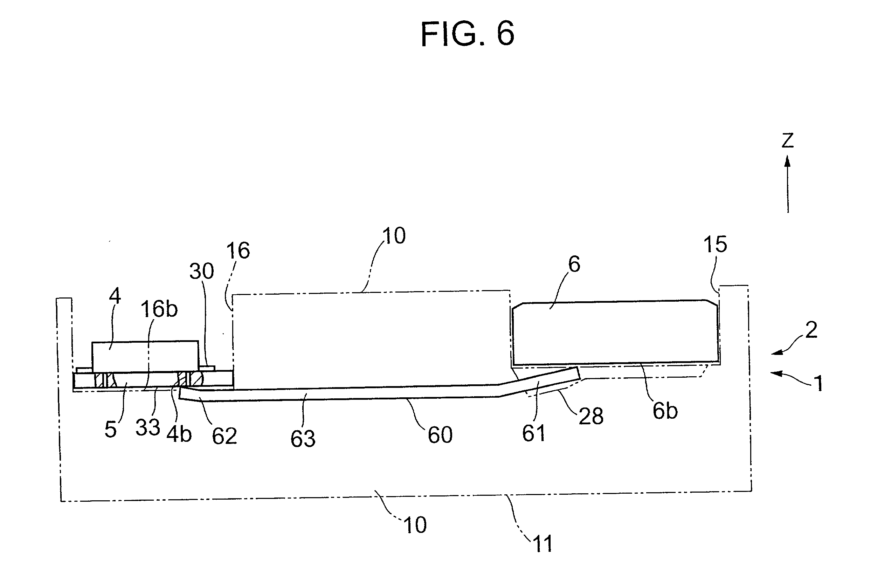

Further, as is mostly understood from Fig. 6 schematically showing a side face similar to that of Fig. 3, a pin 4b of IC 4 also substantially penetrates the board 5 and is slightly projected from the back face 33 of the board 5 and the minus terminal piece 62 of the slender conductive portion 60 is exposed from the bottom face 16b of the recessed portion 16 and is brought into contact with a front end of the pin 4b on the side of the back face 33 of the board 5 mounted with IC 4 mounted to the recessed portion 16.

According to the main plate structure 2 of the second embodiment, in a different point of view, the terminal piece portions 52 and 62 of the conductive portions 50 and 60 and the wiring portions 53 and 63 per se serve as patterned wirings for circuit parts. Therefore, from the viewpoint, for example, other than the power source pin 4a of IC 4, the conductive portion 50 can directly be connected to a plus power feed terminal 3a of the oscillator 3 (when the same power source voltage is used) as shown by an imaginary line 50i in Fig. 4. Naturally, the conductive portions 50 and 60 can be used not only for connecting the power source 6 such as the battery and other electric part but also for electrically connecting a desired electric part. Particularly, in the case of electrically connecting two circuit parts which are difficult to mount on a single circuit board since the circuit parts are disposed at locations spaced apart from each other or which are difficult to mount on a common circuit board since other mechanical part or the like is disposed at a middle of the two circuit parts regardless of large or small of a distance between the two circuit parts, there is formed a conductive path by a conductive portion at inside of a nonconductive supporter (a portion or a total thereof may be exposed to a surface depending on cases when there is not reason for evading) integrally with a nonconductive supporter main body portion. In this case, typically, the conductive portion and the nonconductive supporter portion are respectively dispersed uniformly with conductive and nonconductive carbon nanotubes in the same or common resin material. Such a structure is useful not only in the field of precision apparatus having high request of compactly forming a total thereof since an electric part, a board or the like is small as in a watch but also in any other field having a request of minimizing use of a lead wire or a cable.

Meanwhile, according to an apparatus including a plurality or a number of electric parts, there is actually almost no case that an electrically insulating supporter including a cabinet, a frame member (frame) or the like is not used and therefore, a wiring network constituting a transfer path of an electric signal can be formed at the electrically insulating supporter per se. Further, when there is formed a wiring network by a conductive portion dispersed with a conductive carbon nanotube in a resin at a uniform distribution density, there is formed a nonconductive supporter main body portion by a nonconductive main body portion dispersed with a nonconductive carbon nanotube in a resin at a uniform distribution density and the wiring network comprising the conductive portion and the nonconductive supporter main body portion comprising the nonconductive main body portion, are integrally molded by two colors or multiple colors injection molding, not only a total of the supporter is reinforced by carbon nanotube to thereby strengthen the mechanical strength and enable to function as the supporter but also the wiring network and the supporter main body portion comprising a common base resin material are solidly coupled and therefore, even when respective wiring portions are comparatively slender, there is rarely a concern of disconnecting wirings of the wiring network.

## Claims

1. A composite electric part comprising:
a nonconductive main body portion and
at least one conductive portion supported by the nonconductive main body portion,
wherein the nonconductive main body portion includes a nonconductive carbon nanotube, the conductive portion includes a conductive carbon nanotube and molded integrally with the nonconductive main body portion and at least two terminal portions exposed to a surface of the nonconductive main body portion are provided to give a transfer path of an electric signal between two contact portions of an electric part other than the composite electric part.

2. The composite electric part according to Claim 1,
wherein at least one of the terminal portions of the at least one conductive portion is projected elastically deformably from the nonconductive main body portion.

3. The composite electric part according to Claim 1,
wherein the at least one conductive portion is embedded in the nonconductive main body portion at a region thereof other than the terminal portions.

4. The composite electric part according to Claim 1,
wherein the composite electric part is provided with at least a pair of the conductive portions electrically insulated from each other.

5. The composite electric part according to Claim 4,
wherein each of the pair of conductive portions is projected elastically deformably from the nonconductive main body portion at at least one of the terminal portions.

6. The composite electric part according to Claim 5,
wherein each of the pair of conductive portions is embedded in the region other than the terminal portions.

7. The composite electric part according to Claim 4,
wherein ones of the terminal portions of each of the pair of conductive portions are a plus and a minus terminal piece portion capable of being brought into elastic contact with a plus and a minus electrode of a battery.

8. The composite electric part according to Claim 1,
wherein the nonconductive main body portion is a main plate of a timepiece.

9. The composite electric part according to Claim 1, the other electric part is a part selected from the group consisting of a battery, a circuit board, an electric circuit part and an electronic part.

10. The composite electric part according to Claim 1,
wherein the nonconductive main body portion includes an attached portion for attaching the composite electric part to other member.

11. A main plate structure comprising:
a nonconductive main plate main body portion including a nonconductive carbon nanotube; and
apair of conductive terminal pieces each of which includes a conductive carbon nanotube and molded integrally with the main plate main body portion and provided with at least two terminal portions exposed to a surface of the main plate main body portion.

12. An electronic timepiece having the main plate structure according to Claim 11.
